# EUROPÄISCHE PATENTSCHRIFT

(11) **EP 2 956 758 B1**
(45) Veröffentlichungstag und Bekanntmachung des Hinweises auf die Patenterteilung: **27.11.2019**
(21) Anmeldenummer: 14708792.8
(22) Anmeldetag: 10.02.2014
(51) Int. Cl.: G01N 21/64, G01N 21/27

(54) **VERFAHREN UND VORRICHTUNG ZUR BESTIMMUNG EINER KONZENTRATION EINER FLUORESZIERENDEN SUBSTANZ IN EINEM MEDIUM**
METHOD AND DEVICE FOR DETERMINING THE CONCENTRATION OF A FLUORESCENT SUBSTANCE IN A MEDIUM
PROCÉDÉ ET DISPOSITIF POUR DÉTERMINER LA CONCENTRATION D'UNE SUBSTANCE FLUORESCENTE DANS UN MILIEU

(30) Priorität: 15.02.2013 AT 501102013
(43) Veröffentlichungstag der Anmeldung: 23.12.2015
(73) Patentinhaber: VWMS Inventions GmbH, 2295 Zwerndorf (AT)
(72) Erfinder: VOGL, Wolfgang, 2295 Zwerndorf (AT)
(74) Vertreter: KLIMENT & HENHAPEL
(86) Internationale Anmeldenummer: PCT/AT2014/050036
(87) Internationale Veröffentlichungsnummer: WO 2014/124476

(56) Entgegenhaltungen:
- WO-A1-93/07472
- WO-A2-2009/079629
- DE-A1-102005 062 910
- DE-A1-102009 020 252
- JP-A- S6 394 136
- JP-A- 2001 033 388

## Beschreibung

Die Erfindung betrifft ein Verfahren gemäß den Oberbegriff von Anspruch 1.

Weiters betrifft die Erfindung eine Vorrichtung gemäß dem Oberbegriff von Anspruch 7.

Ein solches Verfahren bzw. eine solche Vorrichtung ist beispielsweise aus der JP 63 94136 A bekannt. Andersartige Vorrichtungen bzw. Verfahren sind aus der WO 2009/079629 A2, der DE 10 2005 062910 A1, der WO 93/07472 A1, der JP 2001 033388 A oder der DE 10 2009 020252 A1bekannt.

Aus dem Stand der Technik ist ein Verfahren zur Bestimmung der Anwesenheit einer fluoreszierenden Substanz in einem Medium bekannt, bei welchem die fluoreszierende Substanze mittels einer Anregungsstrahlung gezielt zur Fluoreszenzstrahlung angeregt wird. Die Intensität der Fluoreszenzstrahlung wird gemessen, um abhängig vom Messergebnis auf die Anwesenheit der fluoreszierenden Substanz zu schließen. Die Fluoreszenzmessung als solche wird jedoch im allgemeinen jedoch nicht als zuverlässiges quantitatives Messverfahren angesehen, da nur in Ausnahmefällen aus der Intensität der Fluoreszenzstrahlung auf die Konzentration der fluoreszierenden Substanz rückgeschlossen werden kann. In der Immunologie werden beispielsweise Antikörper mit einer fluoreszierenden chemischen Gruppe versehen, so dass die Orte, an die die Antikörper binden, anhand der Fluoreszenz erkennbar sind. Die Antigen-Konzentration kann damit teilweise auch quantitativ bestimmt werden.

In der Praxis wurde jedenfalls beobachtet, dass die gewünschte Genauigkeit in der Konzentrationsbestimmung durch Messen der Fluoreszenz normalerweise nicht erreicht wurde. Beobachtet wurde einerseits ein Einfluss der Geometrie der Messkammer auf die Messgenauigkeit. Auch bei zeitlich variierenden Bedingungen wurden mit dem bekannten Verfahren keine zufriedenstellenden Ergebnisse erzielt. Dieses Problem konnte bisher nicht gelöst werden.

Demnach besteht die Aufgabe der vorliegenden Erfindung darin, ein Verfahren und eine Vorrichtung der eingangs angeführten Art zu schaffen, mit welchem bzw. mit welcher eine hochgenaue Bestimmung der Konzentration einer fluoreszierenden Substanz ermöglicht wird. Angestrebt wird insbesondere, den Einfluss der Geometrie der Messkammer auf die Messgenauigkeit zu verringern bzw. auszuschalten. Zudem soll die Konzentrationsbestimmung auch bei zeitlich variierenden Bedingungen präzise vorgenommen werden.

Diese Aufgabe wird durch ein Verfahren gemäß Anspruch 1 bzw. eine Vorrichtung gemäß Anspruch 7 gelöst.

Erfindungsgemäß wird zur Lösung dieser Aufgabe zudem die Intensität eines transmittierten Anteils der Anregungsstrahlung gemessen, wobei die Konzentration der fluoreszierenden Substanz aus der Intensität des transmittierten Anteils der Anregungsstrahlung und der Intensität der Fluoreszenzstrahlung ermittelt wird.

Vorteilhafterweise wird daher nicht nur, wie bisher, die Fluoreszenz gemessen, sondern es wird zudem berücksichtigt, dass auch die Absorption des Anregungslichtes in der Probe mit der fluoreszierenden Substanz die Intensität der gemessenen Fluoreszenzstrahlung beeinflussen kann. Wie stark der Einfluss der Absorption auf die Bestimmung der Konzentration ist, kann insbesondere von den Längen abhängen, welche das Licht in der Probe zurücklegt. Demnach ist der Einfluss der Absorption insbesondere von der Geometrie der Messkammer abhängig. Da diese Effekte in der bisher eingesetzten Fluoreszenzmessung nicht berücksichtigt wurden, konnte aus der gemessenen Fluoreszenzintensität als solche nicht auf die Konzentration des fluoreszierenden Stoffes in der Probe geschlossen werden. Demgegenüber kann das erfindungsgemäße Verfahren als hochgenaues quantitatives Verfahren zur Bestimmung der Konzentration der fluoreszierenden Substanz eingesetzt werden. Es hat sich einerseits gezeigt, dass bei Durchführung des Verfahrens zur Bestimmung der Konzentration der fluoreszierenden Substanz die Absorption proportional zur Fluoreszenz ansteigt. Das bedeutet, dass das zur Fluoreszenzmessung nötige Anregungslicht mit zunehmender Eindringtiefe in das Probemedium abgeschwächt wird, was zu einer Verringerung des resultierenden Fluoreszenzsignals führt. Darüber hinaus tritt in der Praxis bei unbekannten Proben häufig eine Absorption des Anregungslichtes in der Probe auf, welche nicht ursächlich mit der Fluoreszenz oder mit der Konzentration des die Fluoreszenz hervorrufenden Stoffes in Verbindung steht. Insgesamt ergibt sich daher im Falle der reinen Fluoreszenzmessung ein systemimmanenter Fehler, der nicht durch Informationen aus der Fluoreszenzmessung korrigiert werden kann. Erfindungsgemäß wird dieser Fehler dadurch ausgeschaltet, dass der transmittierte Anteil der Anregungsstrahlung, welcher Aufschluss über die Absorption der Anregungsstrahlung beim Durchgang durch das Messvolumen gibt, gemessen wird. Die Bestimmung der Konzentration der fluoreszierenden Substanz erfolgt sodann auf Basis sowohl der Fluoreszenz als auch der Transmission der Anregungsstrahlung. Dieses Verfahren ist insbesondere dann von Vorteil, wenn eine Trübung der Probe bzw. eine aus anderen Gründen erhöhte Absorption der Anregungsstrahlung, beispielsweise durch Zugabe einer Reaktionschemie, zur Abschwächung der das Medium durchdringenden Anregungsstrahlung und in der Folge auch zu einem verringerten Fluoreszenzsignal führt. Bei einer reinen Fluoreszenzmessung wäre die Änderung im Signal nicht von einer geringeren Fluoreszenz unterscheidbar, womit ein ungenaues bzw. falsches Ergebnis in der Konzentrationsbestimmung erhalten würde. Demgegenüber bietet die gleichzeitige Messung von Absorption und Fluoreszenz einerseits den Vorteil, dass der transmittierte Anteil der Anregungsstrahlung zur Korrektur von Nichtlinearitäten und Falschmessungen aufgrund der Absorption der Anregungsstrahlung in der Probe herangezogen werden kann. Dies ist beispielsweise dann vorteilhaft, wenn unterschiedliche Geometrien der die Probe aufnehmenden Messkammern zu berücksichtigen sind. Weiters kann beispielsweise aus der Beziehung zwischen Absorption und Fluoreszenz nach dem Eindosieren einer Reaktionschemie, insbesondere eines Substrats, eine Aussage über den qualitativen Zustand der zugegebenen Reaktionschemie getroffen werden. Ein weiterer Vorteil der Erfindung liegt darin, dass bei einem länger andauernden Messvorgang Änderungen in der Konzentration mit hoher Genauigkeit von Variationen in der Durchlässigkeit der Probe unterschieden werden können. Erfindungsgemäß werden hierbei die Intensität der Fluoreszenz und die Intensität der Transmission der Anregungsstrahlung gleichzeitig an ein und demselben Volumenelement des Mediums mit der fluoreszierenden Substanz gemessen. Dies ist vor allem dann von Vorteil, wenn die Probe inhomogen ist oder sich ihr Zustand zeitlich rasch verändert. Bei stabilen und homogenen Proben, die zudem in ausreichender Menge vorhanden sind, kann die Fluoreszenz und die Transmission der Anregungsstrahlung jedoch alternativ auch in derselben Vorrichtung zeitlich nacheinander oder (auch zeitgleich) in getrennten Messeinrichtungen gemessen werden.

Das Medium mit der fluoreszierenden Substanz wird weiters von einer die Fluoreszenzwellenlänge aufweisenden Fluoreszenzabsorptionsstrahlung durchstrahlt, die Intensität eines transmittierten Anteils der Fluoreszenzabsorptionsstrahlung gemessen und die Konzentration der fluoreszierenden Substanz aus der Intensität des transmittierten Anteils der Anregungsstrahlung, der Intensität der Fluoreszenzstrahlung und der Intensität des transmittierten Anteils der Fluoreszenzabsorptionsstrahlung ermittelt wird. Es wird daher die Transmission bzw. Absorption der Probe bei Durchstrahlung mit der Fluoreszenzwellenlänge als weitere Eingangsgröße für die Bestimmung der Konzentration der fluoreszierenden Substanz herangezogen. Die Messung des transmittierten Anteils der Fluoreszenzabsorptionsstrahlung wird hierbei bei abgeschalteter Anregungsstrahlung vorgenommen, so dass die Transmission der Probe bei Durchstrahlung mit der Fluoreszenzwellenlänge unabhängig von der mit der Anregungsstrahlung angeregten Fluoreszenz bestimmbar ist. Demnach wird die Konzentration der fluoreszierenden Substanz aus einem Messwert-Triplett bestimmt, welches sich aus der Fluoreszenzstrahlung einerseits und der Transmission der Anregungsstrahlung und der Fluoreszenzabsorptionsstrahlung andererseits zusammensetzt. Die Transmission von Anregungsstrahlung bzw. Fluoreszenzabsorptionsstrahlung beim Durchgang durch das Medium mit der fluoreszierenden Substanz werden hierbei als Korrekturwerte dem Fluoreszenzsignal aufgeschaltet.

Um noch genauere Messergebnisse zu erhalten, ist bevorzugt vorgesehen, wenn zudem die Intensität eines die Anregungswellenlänge aufweisenden Streulichts gemessen und die Konzentration der fluoreszierenden Substanz aus der Intensität des transmittierten Anteils der Anregungsstrahlung, der Intensität der Fluoreszenzstrahlung und der Intensität des Streulichts, auch der Intensität des transmittierten Anteils der Fluoreszenzabsorptionsstrahlung, ermittelt wird. Die Messung der Streustrahlung wird insbesondere durch einen dritten Strahlungssensor bewerkstelligt, welcher vorzugsweise für die Anregungswellenlänge empfindlich ist bzw. welchem ein entsprechender Bandpassfilter mit Zentralwellenlänge λₑₓ vorgeschaltet ist.

Zur hochgenauen Konzentrationsmessung ist bevorzugt vorgesehen, dass die Konzentration der fluoreszierenden Substanz aus einem Kennlinienfeld ermittelt wird, welches die Konzentration der fluoreszierenden Substanz in Abhängigkeit von der Intensität des transmittierten Anteils der Anregungsstrahlung, der Intensität der Fluoreszenzstrahlung und von der Intensität des transmittierten Anteils der Fluoreszenzabsorptionsstrahlung und gegebenenfalls (d.h. sofern gemessen) der Intensität des Streulichts angibt. Das Kennlinienfeld kann empirisch erhalten werden. Alternativ kann ein Rechenmodell verwendet werden, welches die Eingangsgrößen für die Bestimmung der Konzentration der fluoreszierenden Substanz in Bezug zueinander setzt.

Darüber hinaus ist es für bestimmte Anwendungen günstig, wenn das Kennlinienfeld die Konzentration der fluoreszierenden Substanz zusätzlich in Abhängigkeit von dem pH-Wert und/oder der Temperatur des Mediums angibt, wodurch ein entsprechend höherdimensionales Kennlinienfeld erhalten wird.

Hierbei ist es insbesondere günstig, wenn das Kennlinienfeld in einem der Ermittlung der Konzentration der fluoreszierenden Substanz vorgeschaltenen Messverfahren bestimmt wird, in welchem für vorgegebene Eichkonzentrationen der fluoreszierenden Substanz jeweils die Intensität der Fluoreszenzstrahlung, die Intensität des transmittierten Anteils der Anregungsstrahlung und gegebenenfalls die Intensität des transmittierten Anteils der Fluoreszenzabsorptionsstrahlung und/oder die Intensität des Streulichts gemessen wird. Vorteilhafterweise kann hiermit eine für den Messaufbau spezifische, eindeutige Beziehung zwischen der Konzentration der fluoreszierenden Substanz und den Eingangsgrößen ermittelt werden, welche bei Bestimmung einer unbekannten Konzentration der fluoreszierenden Substanz herangezogen wird. Zur Erhöhung der Auflösung ist es günstig, wenn die Messpunkten des Kennlinienfelds in an sich bekannter Weise durch eine Näherungskurve interpoliert sind. Im Fall der Berücksichtigung des Streulichts können mehrere Messdurchgänge für gleiche Absorption und variierende Streuung vorgenommen werden. Alternativ zu einem solchen Mess- bzw. Eichverfahren kann die Beziehung zwischen der Konzentration und den einzelnen Messgrößen auch durch einen mathematischen Zusammenhang erhalten werden.

Um die Genauigkeit in der Messung zu verbessern, ist es günstig, wenn der transmittierte Anteil der Anregungsstrahlung nach dem Durchgang durch das Medium mit der fluoreszierenden Substanz umgelenkt wird, bevor die Intensität des transmittierten Anteils der Anregungsstrahlung gemessen wird. Hiermit können vorteilhafterweise Störeffekte vermieden werden, welche bei einer Messung der Transmission der Anregungsstrahlung in Richtung der Durchstrahlung des Mediums mit der fluoreszierenden Substanz auftreten könnten.

Die Vorrichtung der eingangs angeführten Art ist dadurch gekennzeichnet, dass ein zweiter Sensor zum Messen der Intensität eines transmittierten Anteils der Anregungsstrahlung vorgesehen ist, wobei die Recheneinheit zur Ermittlung der Konzentration der fluoreszierenden Substanz in Abhängigkeit von der Intensität des transmittierten Anteils der Anregungsstrahlung und der Intensität der Fluoreszenzstrahlung eingerichtet ist.

Hiermit können dieselben Vorteile und technischen Effekte wie bei dem zuvor erläuterten Verfahren erzielt werden, so dass auf die vorstehenden Ausführungen verwiesen wird. Die Recheneinheit weist hierbei vorzugsweise einen Speicher auf, in welchem ein Kennlinienfeld gespeichert ist, welches die Beziehung zwischen der Konzentration der fluoreszierenden Substanz und der Intensität des transmittierten Anteils der Anregungsstrahlung, der Intensität der Fluoreszenzstrahlung, vorzugsweise auch der Intensität des transmittierten Anteils der Fluoreszenzabsorptionsstrahlung, enthält.

Um die Genauigkeit der Konzentrationsbestimmung weiter zu verbessern, ist eine zweite Strahlungsquelle zur Durchstrahlung des Mediums mit der fluoreszierenden Substanz mit einer die Fluoreszenzwellenlänge aufweisenden Fluoreszenzabsorptionsstrahlung vorgesehen ist. Die zweite Strahlungsquelle ist unabhängig von der ersten Strahlungsquelle ein- bzw. ausschaltbar, so dass die Intensität des transmittierten Anteils der Fluoreszenzabsorptionsstrahlung, d.h. die Absorption einer die Fluoreszenzwellenlänge aufweisenden Strahlung beim Durchgang durch das Medium, im eingeschalteten Zustand der zweiten Strahlungsquelle und im ausgeschalteten Zustand der ersten Strahlungsquelle bestimmbar ist.

Der erste Sensor ist zum Messen der Intensität des transmittierten Anteils der Fluoreszenzabsorptionsstrahlung eingerichtet. Der erste Sensor ist mit der Recheneinheit verbunden, welche die Intensität der Fluoreszenz und die Intensität der Fluoreszenzabsorptionsstrahlung als weitere Eingangsgrößen (neben der Transmission der Anregungsstrahlung) zur Bestimmung der Konzentration der fluoreszierenden Substanz erhält.

Darüber hinaus ist bevorzugt, wenn ein dritter Sensor zum Messen der Intensität eines Streulichts vorgesehen ist. Der dritte Sensor ist mit der Recheneinheit verbunden, welche die Intensität des Streulichts als weitere Eingangsgröße zur Bestimmung der Konzentration der fluoreszierenden Substanz erhält.

Gemäß einer bevorzugten Ausführung ist der ersten Strahlungsquelle und/oder der zweiten Strahlungsquelle jeweils ein Referenzsensor zur Kalibrierung der ersten bzw. zweiten Strahlungsquelle zugeordnet. In einer bevorzugten Ausführung misst der Referenzsensor, beispielsweise indem ein konstanter Prozentsatz des Anregungslichtes mittels eines teildurchlässigen Spiegels aus dem Strahlengang des Anregungslichtes ausgekoppelt und dem Referenzsensor zugeführt wird, ständig die Intensität der Anregungsstrahlung. Dieses Referenzsignal wird zu jeder Zeit mit den gemessenen (Transmissions- und Fluoreszenz-)Signalen verglichen. Die Messsignale werden daher stets auf die vom Referenzsensor zur gleichen Zeit gemessene Intensität des Anregungslichtes bezogen. Damit wird vorteilhafterweise sichergestellt, dass etwaige Schwankungen der Intensität des Anregungslichtes keinen Einfluss auf das Messergebnis haben.

In einer bevorzugten Anwendung ist eine Messkammer, insbesondere eine Küvette, zur Aufnahme des Mediums mit der fluoreszierenden Substanz vorgesehen. Vorzugsweise liegt das Medium mit der fluoreszierenden Substanz als flüssige Probe vor. Alternativ kann die Konzentration einer fluoreszierenden Substanz in einem gasförmigen Medium bestimmt werden. In manchen Ausführungen ist es günstig, wenn mehrere Messkammern vorgesehen sind, welche jeweils auf eine unterschiedliche Fluoreszenz- bzw. Anregungswellenlänge abgestimmt sind, so dass die Konzentrationen unterschiedlicher fluoreszierender Substanzen mit derselben Vorrichtung bestimmt werden können. Hierbei ist es günstig, wenn auf die jeweiligen Wellenlängen abgestimmte Kennlinienfelder, vorzugsweise mit Hilfe des oben beschriebenen Messverfahrens, verwendet werden.

Gemäß einer weiteren bevorzugten Ausführung ist vorgesehen, dass die erste Strahlungsquelle zur Abgabe einer mehrere Anregungswellenlängen aufweisenden Anregungsstrahlung, insbesondere mit einem im Wesentlichen kontinuierlichen Anregungsspektrum, eingerichtet ist. Hiefür werden bevorzugt Kennlinienfelder der Konzentration für einen zumindest im Wesentlichen kontinuierlichen Wellenlängenbereich der Anregungs- bzw. Fluoreszenzwellenlänge verwendet, wodurch das Verfahren auf die Bestimmung der Konzentration fluoreszierender Substanzen in einem zumindest im Wesentlichen kontinuierlichen Wellenlängenbereich erweitert werden kann. Zu diesem Zweck kann das oben beschriebene Messverfahren in engen Frequenzabständen für eine Vielzahl von Anregungs- bzw. Fluoreszenzwellenlängen durchgeführt werden, wodurch die Kennlinienfelder für den interessierenden Wellenlängenbereich erhalten werden. In diesem Fall ist es nicht erforderlich, dass die erste Strahlungsquelle zur Abgabe einer monochromatischen Anregungsstrahlung (oder die zweite Strahlungsquelle zur Abgabe einer monochromatischen Fluoreszenzabsorptionsstrahlung) eingerichtet ist, wie dies bei Untersuchung einer einzelnen, im Wesentlichen diskreten Fluoreszenz- bzw. Anregungswellenlänge bevorzugt vorgesehen ist. Stattdessen ist die erste Strahlungsquelle zur Abgabe einer mehrere Anregungswellenlängen aufweisenden Anregungsstrahlung, insbesondere mit einem im Wesentlichen kontinuierlichen Anregungsspektrum, eingerichtet.. Als erster oder zweiter Sensor, gegebenenfalls als Referenzsensor, ist bei dieser Ausführung bevorzugt jeweils ein Spektrometer vorgesehen. Darüber hinaus ist es bei dieser Ausführung günstig, wenn die zweite Strahlungsquelle zur Abgabe der Fluoreszenzabsorptionsstrahlung, gegebenenfalls zudem der Sensor für die Streulichtintensität, entfallen, da die hiermit darstellbaren Informationen bereits im Absorptions- bzw. Fluoreszenzspektrum enthalten sind.

Zur Vermeidung von die Messgenauigkeit beeinträchtigenden Störeffekten ist es günstig, wenn zwischen der Messkammer und dem zweiten Sensor ein Umlenkspiegel zum Umlenken des transmittierten Anteils der Anregungsstrahlung angeordnet ist.

Vorzugsweise bewirkt der Umlenkspiegel eine Umlenkung des transmittierten Anteils der Anregungsstrahlung um im Wesentlichen 90°. Vorteilhafterweise kann hiermit die Genauigkeit beim Messen der Transmission der Anregungsstrahlung deutlich verbessert werden.

Zur Auskopplung der Anregungsstrahlung ist es insbesondere günstig, wenn als Umlenkspiegel ein Strahlteiler, insbesondere ein frequenzselektiver Strahlteiler, vorgesehen ist. Vorzugsweise ist der frequenzselektive Strahlteiler als Langpass (d.h. im Frequenzraum als Tiefpass) ausgeführt, welcher Strahlung der Fluoreszenzwellenlänge nicht reflektiert, sondern durchlässt. Mit dieser Ausführung kann insbesondere erreicht werden, dass vom zweiten Sensor reflektierte Strahlung der Fluoreszenzwellenlänge nicht zurück durch die Messkammer und in der Folge zum ersten Sensor gelangt. Gleichzeitig kann hiermit verhindert werden, dass Strahlung der Fluoreszenzwellenlänge aus der Messkammer zum zweiten Sensor gelangt. Dies ist insbesondere deshalb von Bedeutung, da die Intensitäten von transmittierter Strahlung und Fluoreszenzstrahlung um Größenordnungen unterschiedlich sein können. Der erste Sensor (Fluoreszenzsensor) kann daher wesentlich empfindlicher als der zweite Sensor (Transmissionssensor) sein. Vorzugsweise ist dem Umlenkspiegel zudem die zweite Strahlungsquelle für die Abgabe der Fluoreszenzabsorptionsstrahlung zugeordnet. Hierbei ist es zudem günstig, wenn der Strahlteiler frequenzselektiv ist. Vorzugsweise liegt die Grenzwellenlänge des frequenzselektiven Strahlteilers zwischen der Anregungswellenlänge und der Fluoreszenzwellenlänge. Hiermit kann insbesondere erreicht werden, dass der transmittierte Anteil der Anregungsstrahlung im Wesentlichen zur Gänze in den zweiten Sensor gelangt.

Die Erfindung wird nachstehend anhand von in den Zeichnungen dargestellten bevorzugten Ausführungsbeispielen, auf die sie jedoch nicht beschränkt sein soll, noch weiter erläutert. Im Einzelnen zeigen in der Zeichnung:
Fig. 1 eine Ansicht einer erfindungsgemäßen Vorrichtung zur Bestimmung einer Konzentration einer fluoreszierenden Substanz in einem Medium;
Fig. 2 eine Ansicht einer nicht beanspruchten Vorrichtung zur Konzentrationsbestimmung der fluoreszierenden Substanz;
Fig. 3 eine Ansicht einer weiteren Ausführung der Vorrichtung zur Konzentrationsbestimmung der fluoreszierenden Substanz;
Fig. 4 eine Ansicht einer weiteren nicht beanspruchten Vorrichtung zur Konzentrationsbestimmung der fluoreszierenden Substanz;
Fig. 5 eine schematische Ansicht einer Recheneinheit zur Bestimmung der Konzentration der fluoreszierenden Substanz;
Fig. 6 ein Diagramm zur Veranschaulichung des Zusammenhangs zwischen der angeregten Fluoreszenz bzw. der Transmission der Anregungsstrahlung und der Durchlässigkeit des Mediums, wobei verschiedene Messkurven für konstante Eichkonzentrationen dargestellt sind;
Fig. 7 ein Diagramm mit einem Kennlinienfeld zur Bestimmung der Konzentration der fluoreszierenden Substanz in Abhängigkeit von der Fluoreszenz und der Transmission der Anregungsstrahlung; und
Fig. 8 ein Diagramm zur Veranschaulichung eines Anstiegs des Fluoreszenzsignals, welcher nicht auf eine Erhöhung der Konzentration der fluoreszierenden Substanz, sondern auf einen Anstieg der Transmission der Anregungsstrahlung zurückzuführen ist.

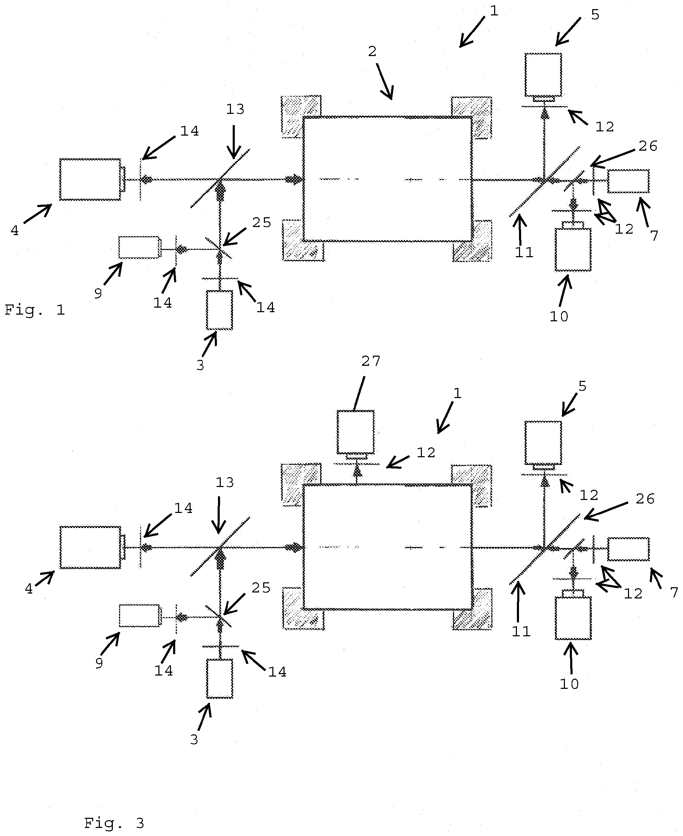

Fig. 1 zeigt eine Vorrichtung 1 zur Bestimmung einer Konzentration c einer fluoreszierenden Substanz in einem Medium, welches in einer Messkammer 2 aufgenommen ist. In der gezeigten Ausführung ist als Messkammer 2 eine Küvette vorgesehen, in welcher eine flüssige Probe mit der fluoreszierenden Substanz aufgenommen ist. Die Vorrichtung 1 weist eine erste Strahlungsquelle 3 zur Abgabe einer Anregungsstrahlung mit einer Anregungswellenlänge λₑₓ auf. Zudem ist ein erster Sensor 4 zum Messen der Intensität I_{fluor} einer durch die Anregungsstrahlung angeregten Fluoreszenzstrahlung (kurz: Fluoreszenz) vorgesehen, welche eine im Vergleich zur Anregungswellenlänge λₑₓ größere Fluoreszenzwellenlänge λₑₘ aufweist. Wie allgemein bekannt, weist das Fluoreszenzlicht stets eine größere Wellenlänge, d.h. eine niedrigere Frequenz (bzw. Energie), als dessen Anregungslicht auf.

Wie aus Fig. 1 weiters ersichtlich, ist zudem ein zweiter Sensor 5 vorgesehen, mit welchem die Intensität eines transmittierten Anteils der Anregungsstrahlung I_{trans,ex} (kurz: Transmission der Anregungsstrahlung) gemessen wird. Die Transmission der Anregungsstrahlung, welche indirekt proportional zur Absorption der Anregungsstrahlung beim Durchgang durch die Probe ist, wird gleichzeitig mit der Messung der Intensität der Fluoreszenzstrahlung I_{fluor} gemessen.

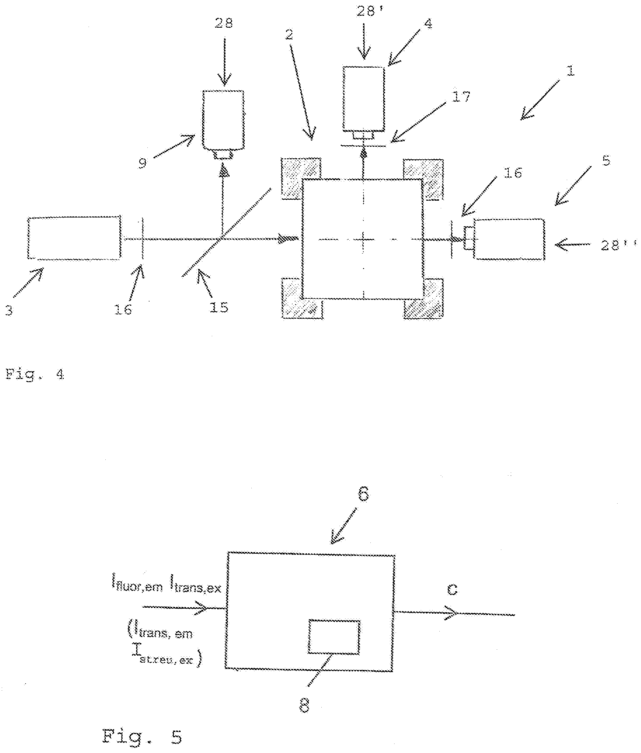

Darüber hinaus ist eine Recheneinheit 6 (vgl. Fig. 5) vorgesehen, mit welcher die Konzentration c der fluoreszierenden Substanz ermittelt wird. In der gezeigten Ausführung wird die Konzentration c nicht nur in Abhängigkeit von der Fluoreszenz, sondern zudem auch abhängig von der Transmission der Anregungsstrahlung bestimmt. Hiermit kann die Genauigkeit der Konzentrationsmessung gegenüber herkömmlichen Verfahren, bei welchen ausschließlich das Fluoreszenzsignal herangezogen wird, wesentlich gesteigert werden, sofern die Fluoreszenzmessung als solche überhaupt eine quantitative Konzentrationsbestimmung ermöglichen konnte.

Wie aus Fig. 1 weiters ersichtlich, ist zudem eine zweite Strahlungsquelle 7 zur Durchstrahlung der Probe mit einer die Fluoreszenzwellenlänge aufweisenden Strahlung, nachstehend Fluoreszenzabsorptionsstrahlung genannt, vorgesehen. Die Intensität I_{trans,em} des transmittierten Anteils (kurz: Transmission) der Fluoreszenzabsorptionsstrahlung wird mit Hilfe des ersten Sensors 3 gemessen, während die erste Strahlungsquelle 3 ausgeschalten ist.

Wie aus Fig. 1 weiters ersichtlich, sind der ersten Strahlungsquelle 3 ein Referenzsensor 9 und der zweiten Strahlungsquelle 7 ein Referenzsensor 10 zugeordnet, mit welchen die erste 3 bzw. zweite Strahlungsquelle 7 kalibrierbar ist. Hiefür wird ein konstanter, vergleichsweise geringer Prozentsatz des Anregungslichtes mittels eines teildurchlässigen Spiegels 25 aus dem Strahlengang des Anregungslichtes ausgekoppelt und dem Referenzsensor 9 zugeführt, um laufend die Intensität der Anregungsstrahlung zu erfassen. Die Transmission der Anregungsstrahlung und die Fluoreszenz (gegebenenfalls auch die Streulichtintensität, vgl. Fig. 3) wird zu jeder Zeit auf das Referenzsignal bezogen, um hiermit eine Eichung der Messsignale vorzunehmen. Entsprechend ist der zweiten Strahlungsquelle 7 ein weiterer teildurchlässiger Spiegel 26 vorgesehen, mit welchem ein (vergleichsweise geringer) Anteil der Fluoreszenzabsorptionsstrahlung in den Referenzsensor 10 umgeleitet wird. Damit kann eine Kalibrierung hinsichtlich der Fluoreszenzabsorptionsstrahlung vorgenommen werden.

Wie aus Fig. 1 weiters ersichtlich, weist die Vorrichtung 1 in der gezeigten Ausführung zudem einen Umlenkspiegel 11 auf, welcher zwischen der Messkammer 2 und dem zweiten Sensor 5 angeordnet ist. Hiermit wird der transmittierte Anteil der Anregungsstrahlung nach dem Verlassen der Messkammer 2 relativ zur Durchstrahlungsrichtung umgelenkt. Der Umlenkspiegel 11 bewirkt hierbei eine Umlenkung des transmittierten Anteils der Anregungsstrahlung um im Wesentlichen 90° relativ zur Richtung der Anregungsstrahlung beim Durchgang durch die Messkammer 2. In der gezeigten Ausführung ist als Umlenkspiegel 11 ein Strahlteiler vorgesehen, welcher frequenzselektiv mit einer Grenzwellenlänge zwischen der Anregungs- und der Fluoreszenzwellenlänge ausgeführt ist, so dass Strahlung der Fluoreszenzwellenlänge nicht reflektiert, sondern durchgelassen wird. Damit wird einerseits verhindert, dass vom zweiten Sensor 5 reflektierte Strahlung der Fluoreszenzwellenlänge durch die Messkammer bis zum ersten Sensor 4 und Strahlung der Fluoreszenzwellenlänge aus der Messkammer 2 zum zweiten Sensor 5 gelangt.

In der gezeigten Ausführung ist dem Referenzsensor 10, der zweiten Strahlungsquelle 7 und dem zweiten Sensor 5 je ein (optionaler) Bandpassfilter 12 vorgeschalten. Am Referenzsensor 10 wird ein Referenzwert für die Intensität der Fluoreszenzabsorptionsstrahlung erhalten, um etwaige Schwankungen in der Intensität der Fluoreszenzabsorptionsstrahlung berücksichtigen zu können.

Wie aus Fig. 1 weiters ersichtlich, ist zwischen der ersten Strahlungsquelle 3 und der Messkammer 2 ein weiterer Umlenkspiegel 13 vorgesehen, mit welchem die Anregungsstrahlung unter Umlenkung um im Wesentlichen 90° in die Messkammer 2 eingekoppelt wird. Der Umlenkspiegel 13 ist entsprechend dem Umlenkspiegel 11 als frequenzselektiver Strahlteiler ausgeführt, dessen Grenzwellenlänge zwischen der Anregungs- λₑₓ und der Fluoreszenzwellenlänge λₑₘ liegt. Der erste Sensor 4 ist parallel zur Durchstrahlungsrichtung der Messkammer 2 auf der von der Messkammer 2 abgewandten Seite des Umlenkspiegels 13 angeordnet. Zudem ist dem ersten Sensor 4, ebenso wie dem Referenzsensor 9 und der ersten Strahlungsquelle 3, optional je ein Bandpassfilter 14 vorgeschalten. Der optionale Einsatz der Bandpassfilter 12, 14 kann insbesondere von der Charakteristik der Sensoren oder Strahlungsquellen abhängig gemacht werden.

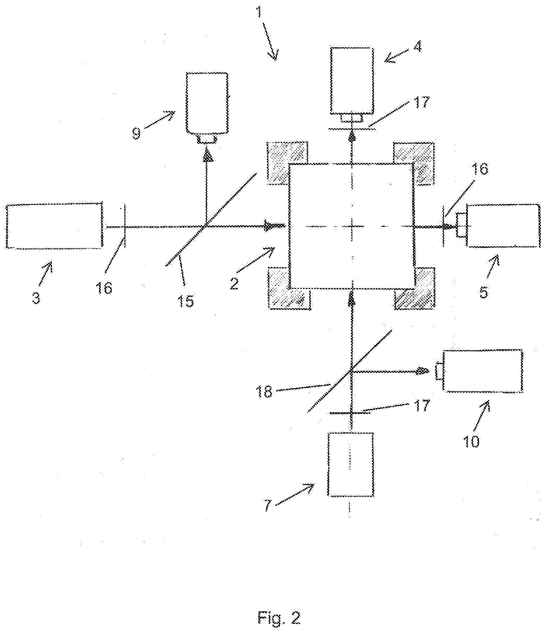

Fig. 2 zeigt eine nicht beanspruchte Vorrichtung 1 zur Bestimmung der Konzentration c der fluoreszierenden Substanz, wobei nachstehend lediglich auf die Unterschiede zu Fig. 1 eingegangen wird.

Gemäß Fig. 2 ist zwischen der ersten Strahlungsquelle 3 und der Messkammer 2 ein teildurchlässiger Spiegel 15 angeordnet, mit welchem jeweils ein Anteil der Anregungsstrahlung in die Messkammer 2 eingekoppelt bzw. dem Referenzsensor 9 zuführbar ist. Am Referenzsensor 9 wird laufend ein Referenzsignal für die Intensität der Anregungsstrahlung erfasst. Optional kann der ersten Strahlungsquelle 3 ein auf die Anregungswellenlänge abgestimmter Filter 16 vorgeschalten sein. Ein weiterer Filter 16 für die Anregungswellenlänge λₑₓ ist dem zweiten Sensor 5 für die Erfassung der Transmission der Anregungsstrahlung vorgeschalten. Entsprechende, jedoch auf die Fluoreszenzwellenlänge λₑₘ abgestimmte Filter 17 sind der zweiten Strahlungsquelle 7 zur Abgabe der Fluoreszenzabsorptionsstrahlung und dem ersten Sensor 4 zur Erfassung der Transmission der Fluoreszenzabsorptionsstrahlung bzw. der Fluoreszenz zugeordnet.

Gemäß Fig. 2 ist zwischen der zweiten Strahlungsquelle 7 und der Messkammer 2 ein weiterer teildurchlässiger Spiegel 18 angeordnet, mit welchem jeweils ein Anteil der Fluoreszenzabsorptionsstrahlung in die Messkammer 2 eingekoppelt bzw. dem Referenzsensor 10 zugeführt wird. Am Referenzsensor 10 wird laufend ein Referenzsignal für die Intensität der Fluoreszenzabsorptionsstrahlung erfasst, welches die exakte Bestimmung der Transmission der Fluoreszenzabsorptionsstrahlung (und daraus die Absorption der Fluoreszenzstrahlung in der Probe) erlaubt.

Gemäß Fig. 2 wird die Fluoreszenz in einem Winkel von insbesondere 90° zur Einstrahlungsrichtung der Anregungsstrahlung gemessen. Im Unterschied zu Fig. 1 sind hierbei keine Strahlteiler im Strahlengang zwischen der Messkammer 2 und dem ersten Sensor 4 bzw. im Strahlengang zwischen der Messkammer 2 und dem zweiten Sensor 5 vorgesehen.

Wie aus Fig. 3 ersichtlich, wird bei dieser Ausführung zudem mit Hilfe eines dritten Sensors 27 die Intensität I_{streu,ex} einer die Anregungswellenlänge λₑₓ aufweisenden Streustrahlung gemessen und zur Bestimmung der Konzentration der fluoreszierenden Substanz herangezogen. Dem dritten Sensor 27 ist (optional) ein Bandpassfilter 12 vorgeschalten. Ansonsten entspricht die Anordnung gemäß Fig. 3 der in Fig. 1 gezeigten Ausführung, wobei selbstverständlich auch bei der Ausführung gemäß Fig. 2 ein dritter Sensor 27 zur Erfassung der Intensität des Streulichts vorhanden sein kann.

Gemäß Fig. 4 wird eine erste Strahlungsquelle 3 mit einem breiten, kontinuierlichen Anregungsspektrum verwendet. Der erste Sensor 4, zweite Sensor 5 und der Referenzsensor 9 sind hierbei als Spektrometer 28, 28', 28" ausgebildet. Bei dieser Ausführung kann die zweite Strahlungsquelle 7 zur Abgabe der Fluoreszenzabsorptionsstrahlung und der dritte Sensor 27 für die Streulichtintensität entfallen.

Wie aus Fig. 5 ersichtlich, erhält die Recheneinheit 6 die Fluoreszenz, die Transmission der Anregungsstrahlung und, jeweils optional die Transmission der Fluoreszenzabsorptionsstrahlung und die Intensität des Streulichts als Eingangsgrößen. Die Recheneinheit 6 weist einen Speicher 8 auf, in welchem ein Kennlinienfeld zur Bestimmung der Konzentration c der fluoreszierenden Substanz aus den Eingangsgrößen abgespeichert ist. Als Ausgangsgröße der Recheneinheit 6 liefert die Recheneinheit 6 die gesuchte Konzentration c der fluoreszierenden Substanz.

Wie schon erwähnt, wird die Konzentration der fluoreszierenden Substanz mit Hilfe der Recheneinheit 6 aus den Messgrößen bestimmt, welche durch ein im Speicher 8 abgelegtes Kennlinienfeld miteinander verknüpft sind. Das Kennlinienfeld kann in einem der Konzentrationsbestimmung vorgelagerten Messverfahren bestimmt werden, welches nachstehend erläutert wird.

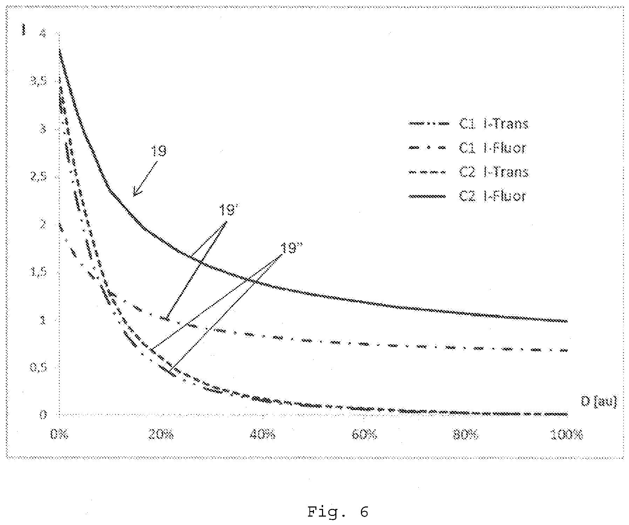

Gemäß Fig. 6 werden in einem ersten Schritt des Mess- bzw. Eichverfahrens für definierte Konzentrationen c1, c2 der fluoreszierenden Substanz einzelne Messkurven 19 angelegt, wobei einerseits die Fluoreszenz (Messkurven 19') und andererseits die Transmission der Anregungsstrahlung (Messkurven 19'') in Abhängigkeit von einer Durchlässigkeit D der Probe bestimmt wird. Die Durchlässigkeit D der Probe kann beispielsweise durch Zudosieren einer opaken Substanz schrittweise variiert werden. Dadurch entstehen die Messkurven 19 für die Fluoreszenz (Messkurven 19') bzw. Transmission (Messkurven 19'') in Abhängigkeit von der Durchlässigkeit bzw. Opazität der Probe bei jeweils konstanter Konzentration der fluoreszierenden Substanz.

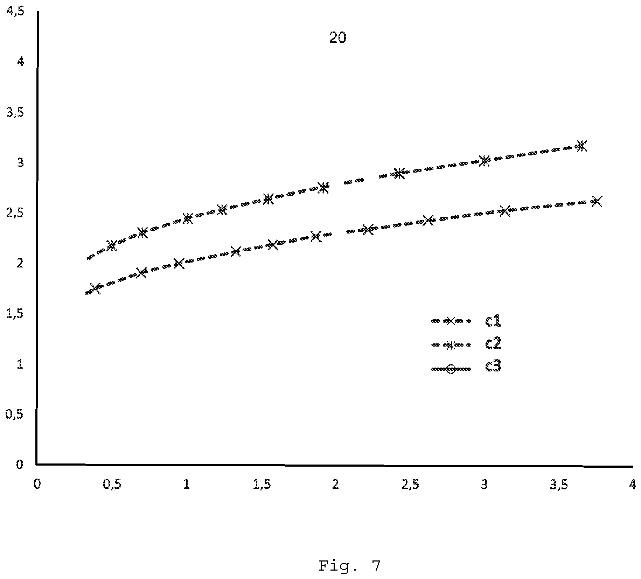

Wie aus Fig. 7 ersichtlich, wird im nächsten Schritt die Fluoreszenz über der Transmission der Anregungsstrahlung aufgetragen (Messkurven 20), wobei jede Messkurve 20 einer bestimmten Eichkonzentration c1 bis c3 entspricht. So entsteht eine Kurvenschar im zweidimensionalen Raum. Je nach Ausführung kann zusätzlich auch die Transmission der Fluoreszenzabsorptionsstrahlung oder die Intensität des Streulichts in Abhängigkeit von der Durchlässigkeit der Probe gemessen werden. In diesem Fall wird anstelle des zweidimensionalen Diagramms der Fig. 7 eine Flächenschar im dreidimensionalen Raum erhalten (nicht gezeigt). Jeder Punkt im (je nach Ausführung zwei- oder dreidimensionalen) Diagramm entspricht hierbei einer bestimmten Konzentration der fluoreszierenden Substanz, so dass eine eindeutige Beziehung zwischen den Messgrößen und der Konzentration c erhalten wird.

Alternativ können auch sowohl Streulicht als auch Fluoreszenzabsorptionsstrahlung berücksichtigt werden, womit eine vierdimensionale Zustandsmatrix erhalten wird, bei welcher jeder Kombination der vier Parameter (d.h. Fluoreszenz, Transmission der Anregungsstrahlung, Transmission der Fluoreszenzabsorptionsstrahlung und Streustrahlung) eindeutig eine Konzentration c der fluoreszierenden Substanz zugeordnet ist.

Je nach Anzahl der Messkurven 20 kann die Genauigkeit der Konzentrationsbestimmung erhöht werden. Darüber hinaus kann auch eine mathematische bzw. numerische Interpolation vorgenommen werden, um eine direkte Umrechnung eines Messwert-Dupletts (bzw. je nach Ausführung auch eines Messwert-Tripletts oder Messwert-Quartetts) in die gesuchte Konzentration c zu ermöglichen.

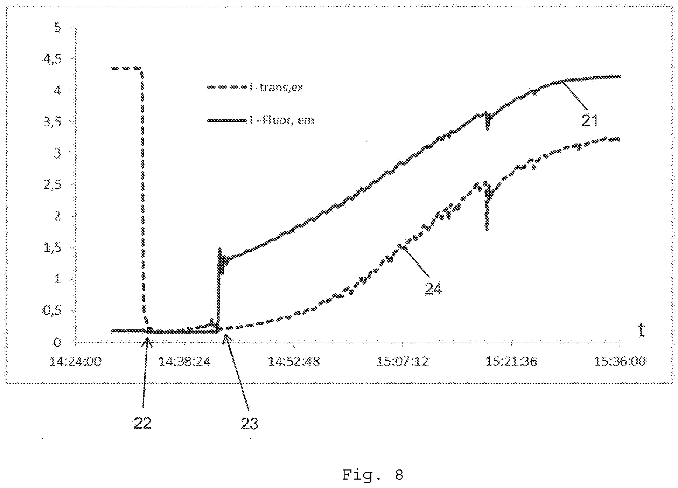

Die Vorteile dieses Verfahrens sind beispielhaft aus Fig. 8 ersichtlich, worin schematisch der zeitliche Verlauf der Fluoreszenz (Signal 21) während eines Messvorgangs dargestellt ist. Untersucht wird eine flüssige Probe, welcher zum Zeitpunkt 22 ein Puffer zugegeben wird. Später wird ein Substrat zudosiert, welches die Entstehung der fluoreszierenden Substanz bewirkt (Pfeil 23). Nach dem Eindosieren des Substrats steigt das Fluoreszenzsignal aufgrund der Eigenfluoreszenz des Substrates zuerst sprunghaft an. Danach ist ein weiterer zeitlicher Anstieg der Fluoreszenz zu beobachten, was den Anschein einer steigenden Konzentration der fluoreszierenden Substanz erweckt. Durch Messung der Transmission der Anregungsstrahlung (Signal 24) lässt sich jedoch feststellen, dass die Transmission beim Einbringen des Puffers zunächst sprunghaft abnimmt, da der Puffer in der Probe dazu führt, dass so gut wie kein Licht mehr in den zweiten Sensor 5 gelangt. Anschließend nimmt die Durchlässigkeit der Probe über die Zeit wieder zu, so dass die Transmission der Anregungsstrahlung ansteigt. Damit steigt auch die Intensität des Anregungssignals für die Fluoreszenz und somit das Fluoreszenzsignal. Demnach beruht der vermeintliche Anstieg der Fluoreszenz nicht etwa auf einer Konzentrationsänderung der fluoreszierenden Substanz, sondern auf einem Anstieg der Transmission der Anregungsstrahlung.

Das vorstehend beschriebene Verfahren kann zur Bestimmung der Konzentration verschiedenartiger fluoreszierender Substanzen herangezogen werden.

Die Intensität der Fluoreszenz eines Stoffes kann hierbei sowohl vom pH-Wert als auch von der Temperatur zum Zeitpunkt der Messung abhängig sein. Die beschriebene Erfindung gestattet auch ohne definierten pH-Wert oder ohne definierte Temperatur eine Verbesserung in der Genauigkeit der Fluoreszenzmessung. Um jedoch die Konzentration eines Stoffes in der Probe bestimmen zu können, soll die gemessene Probe den gleichen pH-Wert und die gleiche Temperatur wie bei der Kalibrierung aufweisen. Dies wird durch Zugabe einer definierten Menge Puffers und einer exakten Temperaturregelung der Messeinrichtung sichergestellt. Alternativ kann das Kennlinienfeld um die Parameter pH-Wert und/oder Temperatur erweitert werden, wodurch ein entsprechend höherdimensionales Kennlinienfeld erhalten wird. Ein solches Kennlinienfeld weist vier Dimensionen (bei Berücksichtigung ausschließlich der Intensität des transmittierten Anteils der Anregungsstrahlung I_{trans,ex} und der Intensität der Fluoreszenzstrahlung I_{flu-or}) oder fünf bzw. sechs Dimensionen (bei zusätzlicher Berücksichtigung der Intensität des transmittierten Anteils der Fluoreszenzabsorptionsstrahlung I_{trans,em} und/oder der Intensität des Streulichts I_{streu,ex}) auf.

Im folgenden wird als Beispiel für das oben beschriebene Verfahren die Bestimmung der Konzentration von Natriumfluorescein in Gewässern bestimmt.

Natriumfluorescein wird als Fluoreszenztracer zur Untersuchung von Grundwasserströmungen eingesetzt. Die optimale Anregungswellenlänge für Natriumfluorescein beträgt 491 nm, das Maximum der Fluoreszenzstrahlung liegt bei 516 nm. Zur Bestimmung der Fluoreszein-Konzentration in der Probe wird zunächst die Messeinrichtung geeicht, indem, wie oben beschrieben, ein Kennlinienfeld erstellt wird. Hiefür werden nacheinander Referenzlösungen vermessen, welche jeweils eine definierte Fluorescein-Konzentration und einen durch eine Pufferlösung eingestellten konstanten pH-Wert, beispielsweise pH 7, aufweisen. Diese Referenzlösungen werden bei konstanter Temperatur, beispielsweise bei 25°C, vermessen. Im Zuge der Kalibrierung wird jede Referenzlösung unter sukzessiver Zugabe einer ansteigenden Konzentration einer opaken Substanz, beispielsweise Formazine, wiederholt gemessen. Die jeweiligen Kombinationen der Messwerte der Fluoreszenzintensität, Transmissionsintensität, gegebenenfalls auch für Streulichtintensität und Intensität der Fluoreszenzabsorptionsstahlung, bei konstanter Fluoreszeinkonzentration und gleichzeitiger Zunahme der Formazinekonzentration werden aufgezeichnet. Dieser Vorgang wird für unterschiedliche Fluoresceinkonzentrationen wiederholt, so dass ein ausreichend dichtes Kennlinienfeld entsteht, welches es erlaubt, den gesamten abzudeckenden Konzentrationsbereich hinreichend durch Interpolation oder mathematische Berechnung darzustellen.

Nach Abschluss der Kalibration ist die Messeinrichtung einsatzbereit. Nun wird eine beliebige Probe, versehen mit einer definierten Menge Puffer zur Einstellung des pH-Wertes, der Messeinrichtung zugeführt, wobei die Intensitätswerte für Fluoreszenz, Tranmission, gegebenenfalls auch für Streulicht und Fluoreszenzabsorptionsstahlung, ermittelt werden. Mit Hilfe dieses Messdatensatzes wird aus dem Kennlinienfeld die tatsächliche Fluoreszeinkonzentration bestimmt.

## Patentansprüche

1. Verfahren zur Bestimmung einer Konzentration (c) einer fluoreszierenden Substanz in einem Medium, wobei das Medium mit der fluoreszierenden Substanz von einer Anregungsstrahlung mit einer Anregungswellenlänge λₑₓ durchstrahlt wird, so dass die fluoreszierende Substanz zur Aussendung einer Fluoreszenzstrahlung mit einer Fluoreszenzwellenlänge λₑₘ angeregt wird, wobei die Intensität der Fluoreszenzstrahlung I_{fluor} gemessen wird,
wobei zudem die Intensität eines transmittierten Anteils der Anregungsstrahlung I_{trans,ex} gemessen wird,
wobei das Medium mit der fluoreszierenden Substanz weiters von einer die Fluoreszenzwellenlänge λₑₘ aufweisenden Fluoreszenzabsorptionsstrahlung durchstrahlt wird und die Intensität eines transmittierten Anteils der Fluoreszenzabsorptionsstrahlung I_{trans,em} gemessen wird,
wobei die Konzentration (c) der fluoreszierenden Substanz aus der Intensität des transmittierten Anteils der Anregungsstrahlung I_{trans,ex}, der Intensität der Fluoreszenzstrahlung I_{fluor} und der Intensität des transmittierten Anteils der Fluoreszenzabsorptionsstrahlung I_{trans,em} ermittelt wird,
**dadurch gekennzeichnet, dass** die Intensität der Fluoreszenzstrahlung I_{fluor} und die Intensität des transmittierten Anteils der Anregungsstrahlung I_{trans,ex} gleichzeitig an ein und demselben Volumenelement des Mediums mit der fluoreszierenden Substanz gemessen werden **und dass** die Intensität der Fluoreszenzstrahlung I_{fluor} und die Intensität des transmittierten Anteils der Fluoreszenzabsorptionsstrahlung I_{trans,em} mit ein und demselben ersten Sensor gemessen werden.

2. Verfahren nach Anspruch 1, **dadurch gekennzeichnet, dass** zudem die Intensität eines die Anregungswellenlänge λₑₓ aufweisenden Streulichts I_{streu,ex} gemessen und die Konzentration (c) der fluoreszierenden Substanz aus der Intensität des transmittierten Anteils der Anregungsstrahlung I_{trans,ex} der Intensität der Fluoreszenzstrahlung I_{fluor} und der Intensität des Streulichts I_{streu,ex} sowie der Intensität des transmittierten Anteils der Fluoreszenzabsorptionsstrahlung I_{trans,em} ermittelt wird.

3. Verfahren nach Anspruch 1 oder 2, **dadurch gekennzeichnet, dass** die Konzentration (c) der fluoreszierenden Substanz aus einem Kennlinienfeld ermittelt wird, welches die Konzentration (c) der fluoreszierenden Substanz in Abhängigkeit von der Intensität des transmittierten Anteils der Anregungsstrahlung I_{trans,ex}, der Intensität der Fluoreszenzstrahlung I_{fluor} und der Intensität des transmittierten Anteils der Fluoreszenzabsorptionsstrahlung I_{trans,em}, sowie gegebenenfalls auch in Abhängigkeit von der Intensität des Streulichts I_{streu,ex}, angibt.

4. Verfahren nach Anspruch 3, **dadurch gekennzeichnet, dass** das Kennlinienfeld die Konzentration (c) der fluoreszierenden Substanz zusätzlich in Abhängigkeit von dem pH-Wert und/oder der Temperatur des Mediums angibt.

5. Verfahren nach Anspruch 3 oder 4, **dadurch gekennzeichnet, dass** das Kennlinienfeld in einem der Ermittlung der Konzentration (c) der fluoreszierenden Substanz vorgeschaltenen Messverfahren bestimmt wird, in welchem für vorgegebene Eichkonzentrationen (c1-c3) der fluoreszierenden Substanz jeweils die Intensität der Fluoreszenzstrahlung I_{fluor}, die Intensität des transmittierten Anteils der Anregungsstrahlung I_{trans,ex} und die Intensität des transmittierten Anteils der Fluoreszenzabsorptionsstrahlung I_{trans,em}, sowie gegebenenfalls die Intensität des Streulichts I_{streu,ex}, gemessen wird.

6. Verfahren nach einem der Ansprüche 1 bis 5, **dadurch gekennzeichnet, dass** der transmittierte Anteil der Anregungsstrahlung nach dem Durchgang durch das Medium mit der fluoreszierenden Substanz umgelenkt wird, bevor die Intensität des transmittierten Anteils der Anregungsstrahlung I_{trans,ex} gemessen wird.

7. Vorrichtung (1) zur Bestimmung einer Konzentration (c) einer fluoreszierenden Substanz in einem Medium, mit zumindest einer ersten Strahlungsquelle (3) zur Abgabe einer Anregungsstrahlung mit einer Anregungswellenlänge λₑₓ, mit einem ersten Sensor (4) zum Messen der Intensität einer durch die Anregungsstrahlung angeregten, eine Fluoreszenzwellenlänge λₑₘ aufweisenden Fluoreszenzstrahlung, mit einer Recheneinheit (6) zur Ermittlung der Konzentration (c) der fluoreszierenden Substanz, mit einem zweiten Sensor (5) zum Messen der Intensität eines transmittierten Anteils der Anregungsstrahlung und mit einer zweiten Strahlungsquelle (7) zur Durchstrahlung des Mediums mit der fluoreszierenden Substanz mit einer die Fluoreszenzwellenlänge λₑₘ aufweisenden Fluoreszenzabsorptionsstrahlung, wobei die Recheneinheit (6) zur Ermittlung der Konzentration (c) der fluoreszierenden Substanz in Abhängigkeit von der Intensität des transmittierten Anteils der Anregungsstrahlung I_{trans,ex}, der Intensität der Fluoreszenzstrahlung I_{fluor} und der Intensität eines transmittierten Anteils der Fluoreszenzabsorptionsstrahlung I_{trans,em} eingerichtet ist,
**dadurch gekennzeichnet, dass**
der erste Sensor (4) zum Messen der Intensität des transmittierten Anteils der Fluoreszenzabsorptionsstrahlung I_{trans,em} eingerichtet ist
**und dass** der erste Sensor (4) und der zweite Sensor (5) zur gleichzeitigen Messung der Intensität der Fluoreszenzstrahlung I_{fluor} und der Intensität des transmittierten Anteils der Anregungsstrahlung I_{trans,ex} an ein und demselben Volumenelement des Mediums mit der fluoreszierenden Substanz eingerichtet sind.

8. Vorrichtung (1) nach Anspruch 7, **dadurch gekennzeichnet, dass** ein dritter Sensor (27) zum Messen der Intensität eines Streulichts vorgesehen ist.

9. Vorrichtung (1) nach Anspruche 7 oder 8, **dadurch gekennzeichnet, dass** der ersten Strahlungsquelle (3) und/oder der zweiten Strahlungsquelle (7) jeweils ein Referenzsensor (9, 10) zur Kalibrierung der ersten (3) bzw. zweiten Strahlungsquelle (7) zugeordnet ist.

10. Vorrichtung (1) nach einem der Ansprüche 7 bis 9, **dadurch gekennzeichnet, dass** eine Messkammer (2), insbesondere eine Küvette, zur Aufnahme des Mediums mit der fluoreszierenden Substanz vorgesehen ist.

11. Vorrichtung (1) nach Anspruch 10, **dadurch gekennzeichnet, dass** zwischen der Messkammer (2) und dem zweiten Sensor (5) ein Umlenkspiegel (11) zum Umlenken des transmittierten Anteils der Anregungsstrahlung angeordnet ist.

12. Vorrichtung (1) nach Anspruch 11, **dadurch gekennzeichnet, dass** der Umlenkspiegel (11) eine Umlenkung des transmittierten Anteils der Anregungsstrahlung um im Wesentlichen 90° bewirkt.

13. Vorrichtung (1) nach Anspruch 12, **dadurch gekennzeichnet, dass** als Umlenkspiegel (11) ein Strahlteiler, insbesondere ein frequenzselektiver Strahlteiler, vorgesehen ist.

14. Vorrichtung nach einem der Ansprüche 7 bis 13, **dadurch gekennzeichnet, dass** die erste Strahlungsquelle (3) zur Abgabe einer mehrere Anregungswellenlängen λₑₓ aufweisenden Anregungsstrahlung, insbesondere mit einem im Wesentlichen kontinuierlichen Anregungsspektrum, eingerichtet ist, wobei als erster Sensor (4) und als zweiter Sensor (5), gegebenenfalls auch als Referenzsensor (9), jeweils ein Spektrometer (28, 28', 28") vorgesehen ist bzw. sind.

## Claims

1. A method for determining a concentration (c) of a fluorescent substance in a medium,
wherein an excitation radiation having an excitation wavelength λₑₓ is radiated through the medium having the fluorescent substance so that the fluorescent substance is excited in such a way that the fluorescent substance emits a fluorescence radiation having a fluorescence wavelength λₑₘ, wherein the intensity of the fluorescence radiation I_{fluor} is measured, wherein additionally the intensity of a transmitted portion of the excitation radiation I_{trans,ex} is measured;
wherein a fluorescence absorption radiation having the fluorescence wavelength λₑₘ is radiated through the medium having the fluorescent substance and the intensity of a transmitted portion of the fluorescence absorption radiation I_{trans,em} is measured, wherein the concentration (c) of the fluorescent substance is determined from the intensity of the transmitted portion of the excitation radiation I_{trans,ex}, the intensity of the fluorescence radiation I_{fluor} and the intensity of the transmitted portion of the fluorescence absorption radiation I_{trans,em},
**characterised in that** the intensity of the fluorescence radiation I_{fluor} and the intensity of the transmitted portion of the excitation radiation I_{trans,ex} are measured simultaneously at the same volume element of the medium having the fluorescent substance and that the intensity of the fluorescence radiation I_{fluor} and the intensity of a transmitted portion of the fluorescence absorption radiation I_{trans,em} are measured on the same first sensor.

2. The method according to claim 1, **characterised in that** the intensity of a scattered light I_{streu,ex} having the excitation wavelength λₑₓ is measured as well, and the concentration (c) of the fluorescent substance is determined from the intensity of the transmitted portion of the excitation radiation I_{trans,ex}, the intensity of the fluorescence radiation I_{fluor} and the intensity of the scattered light I_{streu,ex} and the intensity of the transmitted portion of the fluorescence absorption radiation I_{trans,em}.

3. The method according to claim 1 or 2, **characterised in that** the concentration (c) of the fluorescent substance is determined from a set of characteristic curves, which indicates the concentration (c) of the fluorescent substance depending on the intensity of the transmitted portion of the excitation radiation I_{trans,ex}, the intensity of the fluorescence radiation I_{fluor} and the intensity of the transmitted portion of the fluorescence absorption radiation I_{trans,em} as well as, if applicable, depending on the intensity of the scattered light I_{streu,ex}.

4. The method according to claim 3, **characterised in that** the set of characteristic curves indicates the concentration (c) of the fluorescent substance depending on the pH and/or the temperature of the medium as well.

5. The method according to claim 3 or 4, **characterised in that** the set of characteristic curves is determined by a measuring method carried out before the determination of the concentration (c) of the fluorescent substance, in which the intensity of the fluorescence radiation I_{fluor}, the intensity of the transmitted portion of the excitation radiation I_{trans,ex} and the intensity of the transmitted portion of the fluorescence absorption radiation I_{trans,em} as well as, if applicable, the intensity of the scattered light I_{streu,ex} are measured for each of a number of given calibration concentrations (c1-c3) of the fluorescent substance.

6. The method according to one of claims 1 to 5, **characterised in that** the transmitted portion of the excitation radiation is redirected after passing through the medium having the fluorescent substance before measuring the intensity of the transmitted portion of the excitation radiation I_{trans,ex}.

7. A device (1) for determining a concentration (c) of a fluorescent substance in a medium, having at least a first radiation source (3) for emitting an excitation radiation having an excitation wavelength λₑₓ, having a first sensor (4) for measuring the intensity of a fluorescence radiation I_{fluor} being excited by the excitation radiation and having a fluorescence wavelength λₑₘ, having a computing unit (6) for determining the concentration of the fluorescent substance,
having a second sensor (5) for measuring the intensity of a transmitted portion of the excitation radiation I_{trans,ex} and having a second radiation source (7) for passing a fluorescence absorption radiation having the fluorescence wavelength λₑₘ through the medium having the fluorescent substance,
wherein the computing unit (6) is being set up for determining the concentration (c) of the fluorescent substance depending on the intensity of the transmitted portion of the excitation radiation I_{trans,ex}, the intensity of the fluorescence radiation I_{fluor} and the intensity of the transmitted portion of the fluorescence absorption radiation I_{trans,em}, **characterised in that** the first sensor (4) is set up for measuring the intensity of the transmitted portion of the fluorescence absorption radiation I_{trans,em} and that the first sensor (4) and the second sensor (5) are set up for simultaneously measuring the intensity of the fluorescence radiation I_{fluor} and the intensity of the transmitted portion of the excitation radiation I_{trans,ex} at the same volume element of the medium having the fluorescent substance.

8. The device (1) according to claim 7, **characterised in that** a third sensor (27) is provided for measuring the intensity of a scattered light.

9. The device (1) according to claim 7 or 8, **characterised in that** a reference sensor (9, 10) for calibrating the first (3) and the second radiation source (7), respectively, is associated to the first radiation source (3) and/or the second radiation source (7).

10. The device (1) according to one of claims 7 to 9, **characterised in that** a measuring chamber (2), in particular a cuvette, is provided for receiving the medium having the fluorescent substance.

11. The device (1) according to claim 10, **characterised in that** a deflecting mirror (11) for deflecting the transmitted portion of the excitation radiation is arranged between the measuring chamber (2) and the second sensor (5).

12. The device (1) according to claim 11, **characterised in that** the deflecting mirror (11) effects a deflection of the transmitted portion of the excitation radiation by substantially 90°.

13. The device (1) according to claim 12, **characterised in that** a beam splitter, in particular a frequency-selective beam splitter, is provided as the deflecting mirror (11).

14. The device (1) according to one of claims 7 to 13, **characterised in that** the first radiation source (3) is set up for emitting an excitation radiation having multiple excitation wavelengths λₑₓ, in particular having a substantially continuous excitation spectrum, wherein the first sensor (4) and the second sensor (5) and, if applicable, the reference sensor (9) are each provided as spectrometers (28, 28', 28").

## Revendications

1. Procédé pour déterminer une concentration (c) d'une substance fluorescente dans un fluide, dans lequel le fluide contenant la substance fluorescente est exposé à un rayonnement d'excitation à une longueur d'onde d'excitation λₑₓ, de sorte que la substance fluorescente est excitée pour émettre un rayonnement de fluorescence à une longueur d'onde de fluorescence λₑₘ, dans lequel l'intensité du rayonnement de fluorescence I_{fluor} est mesurée, dans lequel l'intensité d'une part transmise du rayonnement d'excitation I_{trans,ex} est en outre mesurée,
dans lequel le fluide contenant la substance fluorescente est en outre exposé à un rayonnement d'absorption en fluorescence présentant la longueur d'onde de fluorescence λₑₘ et l'intensité d'une part transmise du rayonnement d'absorption en fluorescence I_{trans,em} est mesurée,
dans lequel la concentration (c) de la substance fluorescente est déterminée à partir de l'intensité de la part transmise du rayonnement d'excitation I_{trans,ex}, de l'intensité du rayonnement de fluorescence I_{fluor} et de l'intensité de la part transmise du rayonnement d'absorption en fluorescence I_{trans,em},
**caractérisé en ce que** l'intensité du rayonnement de fluorescence I_{fluor} et l'intensité de la part transmise du rayonnement d'excitation I_{trans,ex} sont mesurées simultanément sur un seul et même élément de volume du fluide contenant la substance fluorescente et **en ce que** l'intensité du rayonnement de fluorescence I_{fluor} et l'intensité de la part transmise du rayonnement d'absorption en fluorescence I_{trans,em} sont mesurées avec un seul et même premier capteur.

2. Procédé selon la revendication 1, **caractérisé en ce que** l'intensité I_{diff,ex} d'une lumière diffusée présentant la longueur d'onde d'excitation λₑₓ est mesurée en outre et la concentration (c) de la substance fluorescente est déterminée à partir de l'intensité de la part transmise du rayonnement d'excitation I_{trans,ex}, de l'intensité du rayonnement de fluorescence I_{fluor} et de l'intensité de la lumière diffusée I_{diff,ex}, ainsi que de l'intensité de la part transmise du rayonnement d'absorption en fluorescence I trans,em.

3. Procédé selon la revendication 1 ou 2, **caractérisé en ce que** la concentration (c) de la substance fluorescente est déterminée à partir d'un champ de courbes caractéristiques indiquant la concentration (c) de la substance fluorescente en fonction de l'intensité de la part transmise du rayonnement d'excitation I_{trans,ex}, de l'intensité du rayonnement de fluorescence I_{fluor} et de l'intensité de la part transmise du rayonnement d'absorption en fluorescence I_{trans,em} ainsi qu'en fonction, le cas échéant, de l'intensité de la lumière diffusée I_{diff,ex}.

4. Procédé selon la revendication 3, **caractérisé en ce que** le champ de courbes caractéristiques indique en outre la concentration (c) de la substance fluorescente en fonction du pH et/ou de la température du fluide.

5. Procédé selon la revendication 3 ou 4, **caractérisé en ce que** le champ de courbes caractéristiques est déterminé au cours d'un procédé de mesure précédant la détermination de la concentration (c) de la substance fluorescente, dans lequel l'intensité du rayonnement de fluorescence I_{fluor}, l'intensité de la part transmise du rayonnement d'excitation I_{trans,ex} et l'intensité de la part transmise du rayonnement d'absorption en fluorescence I_{trans,em}, ainsi que l'intensité de la lumière diffusée I_{diff,ex} le cas échéant, sont mesurées respectivement pour des concentrations d'étalonnage (cl-c3) prédéfinies de la substance fluorescente.

6. Procédé selon l'une des revendications 1 à 5, **caractérisé en ce que** la part transmise du rayonnement d'excitation est déviée après avoir traversé le fluide contenant la substance fluorescente, avant que l'intensité de la part transmise du rayonnement d'excitation I_{trans,ex} soit mesurée.

7. Dispositif (1) pour la détermination d'une concentration (c) d'une substance fluorescente dans un fluide, avec au moins une première source de rayonnement (3) pour émettre un rayonnement d'excitation d'une longueur d'onde d'excitation λₑₓ, avec un premier capteur (4) pour mesurer l'intensité d'un rayonnement de fluorescence suscité par le rayonnement d'excitation et présentant une longueur d'onde de fluorescence λₑₘ, avec une unité de calcul (6) pour déterminer la concentration (c) de la substance fluorescente, avec un deuxième capteur (5) pour mesurer l'intensité d'une part transmise du rayonnement d'excitation est avec une deuxième source de rayonnement (7) pour exposer le fluide contenant la substance fluorescente à un rayonnement d'absorption en fluorescence présentant une longueur d'onde de fluorescence λₑₘ, dans lequel l'unité de calcul (6) est conçue pour déterminer la concentration (c) de la substance fluorescente en fonction de l'intensité de la part transmise du rayonnement d'excitation I_{trans,ex}, de l'intensité du rayonnement de fluorescence I_{fluor} et de l'intensité d'une part transmise du rayonnement d'absorption en fluorescence I_{trans,em},
**caractérisé en ce que** le premier capteur (4) est conçu pour mesurer l'intensité de la part transmise du rayonnement d'absorption en fluorescence I_{trans,em}
et **en ce que** le premier capteur (4) et le deuxième capteur (5) sont conçus pour mesurer simultanément l'intensité du rayonnement de fluorescence I_{fluor} et l'intensité de la part transmise du rayonnement d'excitation I_{trans,ex} dans un seul et même élément de volume du fluide contenant la substance fluorescente.

8. Dispositif (1) selon la revendication 7, **caractérisé en ce qu'**un troisième capteur (27) est prévu pour mesurer l'intensité d'une lumière diffusée.

9. Dispositif (1) selon les revendications 7 ou 8, **caractérisé en ce que** la première source de rayonnement (3) et/ou la deuxième source de rayonnement (7) sont associées chacune à un capteur de référence (9, 10) pour l'étalonnage de la première source de rayonnement (3) ou de la deuxième (7).

10. Dispositif (1) selon l'une des revendications 7 à 9, **caractérisé en ce qu'**une chambre de mesure (2), en particulier une cuvette, est prévue pour recevoir le fluide contenant la substance fluorescente.

11. Dispositif (1) selon la revendication 10, **caractérisé en ce qu'**un miroir de déviation (11) est disposé entre la chambre de mesure (2) et le deuxième capteur (5) pour dévier la part transmise du rayonnement d'excitation.

12. Dispositif (1) selon la revendication 11, **caractérisé en ce que** le miroir de déviation (11) dévie la part transmise du rayonnement d'excitation de sensiblement 90°.

13. Dispositif (1) selon la revendication 12, **caractérisé en ce qu'**il est prévu comme miroir de déviation (11) un séparateur de faisceaux, en particulier un séparateur de faisceaux sélectif en fréquence.

14. Dispositif selon l'une des revendications 7 à 13, **caractérisé en ce que** la première source de rayonnement (3) est conçue pour émettre un rayonnement d'excitation présentant plusieurs longueurs d'onde d'excitation λₑₓ, en particulier avec un spectre d'excitation sensiblement continu, un spectromètre (28, 28', 28") étant prévu respectivement comme premier capteur (4) et deuxième capteur (5), éventuellement aussi comme capteur de référence (9).
